Europäisches Patentamt

European Patent Office

Office européen des brevets

(19)

(11) EP 0 700 404 B1

(12) FASCICULE DE BREVET EUROPEEN

(45) Date de publication et mention
de la délivrance du brevet:
20.08.1997 Bulletin 1997/34

(51) Int Cl.⁶: **C08F 4/02**, B01J 27/16,
B01J 21/12

(21) Numéro de dépôt: 94917615.0

(22) Date de dépôt: 10.05.1994

(86) Numéro de dépôt international:
PCT/EP94/01513

(87) WO 94/26790 (24.11.1994 Gazette 1994/26)

(54) **SUPPORT POUR CATALYSEURS, PROCEDE POUR LA FABRICATION D'UN GEL PRECURSEUR D'UN SUPPORT POUR CATALYSEURS**

KATALYSATORTRÄGER, VERFAHREN ZUR HERSTELLUNG EINES KATALYSATORTRÄGERVORLÄUFERGELS

CATALYST SUPPORT, METHOD FOR MAKING A PRECURSOR GEL FOR A CATALYST SUPPORT

(84) Etats contractants désignés:
AT BE CH DE DK ES FR GB IE IT LI NL PT SE

(30) Priorité: 17.05.1993 BE 9300508

(43) Date de publication de la demande:
13.03.1996 Bulletin 1996/11

(73) Titulaire: SOLVAY POLYOLEFINS EUROPE -
BELGIUM (Société Anonyme)
1050 Bruxelles (BE)

(72) Inventeurs:
• KOCH, Benoît
B-4280 Hannut (BE)
• RULMONT, André
B-4031 Liège (BE)
• WIJZEN, Fabienne
B-4630 Ayeneux (BE)

(74) Mandataire: Destryker, Elise Martine et al
Solvay Polyolefins Europe-Belgium
(Société Anonyme)
Département de la Propriété Industrielle
Rue de Ransbeek, 310
1120 Bruxelles (BE)

(56) Documents cités:
EP-A- 0 055 864         EP-A- 0 283 815
DE-A- 2 154 764         FR-A- 2 315 997

## Description

La présente invention concerne un support pour catalyseurs contenant au moins deux constituants choisis parmi la silice, l'alumine et le phosphate d'aluminium, en particulier un support ternaire constitué de silice, d'alumine et de phosphate d'aluminium. L'invention concerne également un procédé de fabrication d'un gel précurseur d'un tel support, contenant de la silice, ainsi qu'un procédé pour fabriquer un support à partir dudit gel précurseur. Elle concerne en outre des catalyseurs pour la polymérisation d'oléfines contenant du chrome sur un tel support, ainsi que l'utilisation de ces catalyseurs dans la polymérisation d'oléfines.

Des supports constitués de mélanges d'oxydes sont déjà connus. Par exemple, dans la demande de brevet EP-A-283815, on décrit des compositions comprenant de l'alumine et de la silice convenant pour le traitement d'hydrocarbures liquides. Dans la demande de brevet FR-A-2315997 on décrit des supports comprenant de l'alumine et du phosphate d'aluminium convenant pour la conversion des hydrocarbures.

Le brevet US-4758544 (CHEVRON RESEARCH COMPANY) décrit un support pour catalyseurs composé d'alumine, de phosphate d'aluminium et de silice présentant un rayon moyen des pores de 10 à 300 Å, une surface spécifique de 50 à 400 m$^2$/g et un volume poreux de 0.1 à 1.5 cm$^3$/g, convenant pour l'hydrodénitrification d'huiles.

Dans le brevet US-3342750 (ESSO), on divulgue la préparation de supports pour catalyseurs, contenant du phosphate d'aluminium et de la silice, dont la surface spécifique est par exemple égale à 403 m$^2$/g et le volume poreux à 0,77 cm$^3$/g.

Dans l'exemple IA de la demande de brevet GB-A-2090158 (PHILLIPS PETROLEUM COMPANY), on décrit un procédé de préparation d'un support pour catalyseurs, composé de silice et de phosphate d'aluminium, selon lequel on prépare une solution contenant de l'isopropanol, de l'eau, de l'acide phosphorique, de l'éthylate de silicium et de l'acide sulfurique, on y ajoute du nitrate d'aluminium, de l'acide phosphoramideux et du nitrate de chrome, et on y introduit de l'hydroxyde d'ammonium pour effectuer une cogélification.

Ces supports connus présentent un degré d'hétérogénéité élevé et cristallisent dès lors très vite lorsqu'ils sont soumis à une calcination à des températures supérieures à 700 °C. D'autre part, ces supports ne combinent pas simultanément une surface spécifique élevée avec un volume poreux élevé. Il en résulte que ces supports connus ne permettent pas de fabriquer des catalyseurs à base de chrome pour la polymérisation d'oléfines, qui présentent, à la fois, une activité catalytique élevée, une période faible d'induction de la polymérisation et une bonne réponse à l'hydrogène. En outre, ils ne permettent pas d'obtenir des polyoléfines ayant une distribution de masses moléculaires modulable entre une distribution moyennement large et une distribution très large pour un indice de fluidité donné, et ils donnent généralement lieu à une formation importante d'oligomères.

L'invention remédie à ces inconvénients en fournissant un support nouveau, de structure homogène et amorphe, résistant à la cristallisation, possédant simultanément un volume poreux élevé et une surface spécifique élevée, et qui, lorsqu'il est mis en oeuvre comme support pour un catalyseur à base de chrome dans la polymérisation d'oléfines, confère à ce catalyseur l'ensemble des avantages suivants :

- une activité catalytique élevée même en l'absence d'un cocatalyseur,
- une période d'induction de la polymérisation faible, voire nulle,
- une bonne réponse à l'hydrogène,

ce catalyseur permettant d'obtenir des polyoléfines ayant :

- une distribution des masses moléculaires modulable entre une distribution moyennement large et une distribution très large pour un indice de fluidité donné, et
- une fraction faible en oligomères.

En conséquence, l'invention concerne un support pour catalyseurs contenant au moins deux constituants choisis parmi la silice, l'alumine et le phosphate d'aluminium; selon l'invention, le support présente une surface spécifique de 100 à 800 m$^2$/g, une température de cristallisation supérieure ou égale à 700 °C et un volume poreux de 1,5 à 4 cm$^3$/g, la surface spécifique (SS) et le volume poreux (VP) répondant à la relation suivante :

$$SS < (VP \times 564 - 358),$$

dans laquelle SS et VP sont respectivement les valeurs numériques de la surface spécifique exprimée en m$^2$/g et du volume poreux exprimé en cm$^3$/g.

Selon l'invention, la surface spécifique (SS) du support est mesurée selon la méthode volumétrique BET de la norme britannique BS 4359/1 (1984); le volume poreux (VP) est la somme du volume poreux constitué de pores de rayon inférieur ou égal à 75 Å, mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976).

Selon l'invention, la température de cristallisation du support est déterminée en soumettant un échantillon du support à un traitement thermique à différentes températures (500 °C, 700 °C, 800 °C, 950 °C, 1050 °C), et en examinant ensuite, après chaque traitement thermique, cet échantillon par diffraction des rayons X.

Selon une variante avantageuse de l'invention, le support est du type binaire contenant de la silice (A) et un constituant (B) choisi parmi l'alumine et le phosphate d'aluminium, de préférence dans un pourcentage molaire (A):(B) de (10 à 95):(90 à 5).

Selon une autre variante de l'invention, que l'on préfère, le support est du type ternaire contenant de la silice (X), de l'alumine (Y) et du phosphate d'aluminium (Z), de préférence en pourcentage molaire (X):(Y):(Z) de (10 à 95):(1 à 80):(1 à 85).

Selon encore une autre variante de l'invention, particulièrement préférée, le support contient, outre au moins deux constituants choisis parmi la silice, l'alumine et le phosphate d'aluminium, du titane, généralement sous la forme de dioxyde de titane. La quantité de titane présente dans le support selon l'invention, exprimée en pourcentage molaire de $TiO_2$, est en général au moins égale à 0,1 % mol, de préférence à 0,5 % mol; les valeurs d'au moins 1 % mol étant les plus courantes. La quantité de titane exprimée en pourcentage molaire de $TiO_2$ ne dépasse pas le plus souvent 40 % mol, plus particulièrement pas 20 % mol, les valeurs d'au plus 15 % mol étant recommandées.

Le support selon l'invention se présente généralement à l'état d'une poudre dont les grains ont un diamètre de 20 à 200 μm.

Le support suivant l'invention présente habituellement un poids spécifique apparent supérieur ou égal à 50 kg/m$^3$, en particulier à 100 kg/m$^3$; il est généralement au maximum égal à 500 kg/m$^3$, typiquement à 300 kg/m$^3$. Dans la définition précédente du poids spécifique apparent, celui-ci est mesuré par écoulement libre selon le mode opératoire suivant : dans un récipient cylindrique de 50 cm$^3$ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on divise le résultat obtenu (exprimé en g) par 50.

En plus de la silice, de l'alumine et/ou du phosphate d'aluminium, et/ou, le cas échéant du titane, le support selon l'invention peut éventuellement contenir des substances additionnelles. Il peut par exemple s'agir de traces d'éléments des groupes IA et IIA du tableau périodique ou de métaux tels que le fer. Ces éléments doivent toutefois être présents en des quantités limitées, n'exerçant pas d'influence sur les propriétés intrinsèques du support.

L'invention concerne également un procédé de fabrication d'un gel précurseur d'un support conforme à l'invention, tel que décrit ci-dessus, selon lequel on mélange, dans une première étape, un alcool, de l'eau, un alcoolate de silicium et un acide en des quantités telles que le rapport molaire eau/silicium soit de 2 à 50, on ajoute au milieu d'hydrolyse ainsi obtenu, dans une deuxième étape, une solution acide d'un composé d'aluminium et/ou une solution d'une source d'ions phosphates, et, dans une troisième étape, un agent gélifiant; selon l'invention, la première étape est réalisée à pH acide et comprend, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une gélification ou une précipitation de silice.

Dans le procédé selon l'invention, l'alcoolate de silicium mis en oeuvre à la première étape, peut être tout composé dans lequel le silicium est lié à au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. Les alcoolates de silicium comprenant des groupements alkoxy du type aliphatique sont spécialement recommandés; ceux comprenant des groupements alkoxy du type aliphatique saturé, non substitué sont préférés, tels que, par exemple, les groupements méthyle, éthyle, n-propyle, iso-propyle, n-butyle et iso-butyle. Les alcoolates de silicium qui conviennent bien sont le tétra-éthylate, le tétra-méthylate et le tétra-isopropylate de silicium. Tout particulièrement préféré est le tétra-éthylate de silicium. On peut bien entendu mettre en oeuvre plusieurs alcoolates de silicium à la première étape du procédé selon l'invention.

Dans le procédé selon l'invention, l'alcool mis en oeuvre dans la première étape a pour fonction de dissoudre l'alcoolate de silicium. En principe, tout alcool qui solubilise l'alcoolate de silicium et qui est miscible à l'eau, peut convenir. On peut ainsi mettre en oeuvre un alcool dont le groupement hydrocarboné peut être saturé, insaturé, aromatique ou aliphatique, linéaire ou cyclique, non substitué ou substitué partiellement ou totalement. Les alcools aliphatiques linéaires sont préférés. On peut citer comme exemple l'éthanol, l'isopropanol et le méthanol. Tout particulièrement préféré est l'éthanol. Il va de soi qu'on peut mettre en oeuvre simultanément plusieurs alcools dans la première étape du procédé selon l'invention. On utilise de préférence un alcool dont le groupement hydrocarboné correspond à celui du groupe alkoxy de l'alcoolate de silicium utilisé.

La quantité d'alcool mise en oeuvre dans la première étape du procédé selon l'invention, doit être suffisante pour permettre une dissolution complète de l'alcoolate de silicium et dépend dès lors de l'alcoolate de silicium et de l'alcool sélectionnés, de la solubilité de l'alcoolate de silicium dans l'alcool et de la température à laquelle la première étape est effectuée. En pratique, on n'a pas intérêt à utiliser une quantité très supérieure à la quantité minimale nécessaire, car un large excès entraînerait une dilution inutile du mélange issu de la première étape, ce qui est à éviter.

La première étape du procédé suivant l'invention a pour objectif (a) d'hydrolyser partiellement l'alcoolate de silicium en présence d'eau et (b) de condenser partiellement l'alcoolate de silicium hydrolysé, selon les réactions suivantes :

$$(a) \qquad Si(O\text{-}R)_4 + x\ H_2O \rightarrow Si(OH)_x(O\text{-}R)_{4\text{-}x} + x\ R\text{-}OH$$

$$(b) \qquad 2\ Si(OH)_x(O\text{-}R)_{4\text{-}x} \rightarrow O\text{-}[Si(OH)_{x\text{-}1}(O\text{-}R)_{4\text{-}x}]_2 + H_2O$$

ou

$$2\ Si(OH)_x(O\text{-}R)_{4\text{-}x} \rightarrow [Si(OH)_x(O\text{-}R)_{3\text{-}x}]\text{-}O\text{-}[Si(OH)_{x\text{-}1}(O\text{-}R)_{4\text{-}x}] + R\text{-}OH$$

dans lesquelles R représente un radical hydrocarboné pouvant être aromatique ou aliphatique, saturé ou insaturé, linéaire, branché ou cyclique, qui peut éventuellement être différent dans les quatre groupes (O-R), et x représente un nombre supérieur à 0 et inférieur à 4, de préférence de 0,1 à 3,9. Dans la première étape on utilise une quantité d'eau telle que le rapport molaire entre cette quantité d'eau et la quantité de l'alcoolate de silicium mise en oeuvre soit de 2 à 50. De préférence, ce rapport molaire est de 2 à 20, plus particulièrement de 8 à 12, par exemple environ 10.

Par la suite, on entend désigner par l'expression "alcoolate de silicium hydrolysé et condensé" les composés O-$[Si(OH)_{x\text{-}1}(O\text{-}R)_{4\text{-}x}]_2$ et $[Si(OH)_x(O\text{-}R)_{3\text{-}x}]\text{-}O\text{-}[Si(OH)_{x\text{-}1}(O\text{-}R)_{4\text{-}x}]$ tels que définis ci-dessus.

Une des caractéristiques essentielles du procédé selon l'invention est la combinaison de conditions opératoires, à la première étape d'hydrolyse, telles qu'on évite toute précipitation ou gélification de silice dans le milieu d'hydrolyse. A cet effet, le mélange à la première étape est réalisé dans des conditions déterminées concernant le pH et la température du milieu d'hydrolyse, le rapport molaire des quantités d'eau et d'alcoolate de silicium mises en oeuvre, et la manière de mélanger les réactifs. Par milieu d'hydrolyse, on entend désigner le milieu obtenu après mélange de l'eau, de l'acide, de l'alcoolate de silicium et de l'alcool. A cet effet, dans la première étape du procédé selon l'invention, le pH du milieu d'hydrolyse est acide. En général, le pH est inférieur à 3, de préférence de 0,5 à 2,5, par exemple environ égal à 1. L'acide mis en oeuvre à la première étape peut être de nature minérale ou organique. Il est avantageusement choisi parmi les acides miscibles à l'eau et dont l'anion est facilement éliminable dans un traitement ultérieur du gel précurseur. Il peut par exemple s'agir de l'acide chlorhydrique, nitrique, phosphorique ou sulfurique. On utilise de préférence l'acide chlorhydrique ou l'acide nitrique. L'acide chlorhydrique convient particulièrement bien. On peut éventuellement mettre en oeuvre plusieurs acides dans la première étape du procédé selon l'invention. La quantité d'acide doit être suffisante pour maintenir le pH acide pendant toute la durée de la première étape. La quantité d'acide dépend dès lors du degré d'acidité de l'acide utilisé ainsi que des autres réactifs, et de la température à laquelle la première étape est réalisée. On n'a pas intérêt à utiliser une quantité trop élevée de l'acide pour éviter de devoir éliminer, dans une étape ultérieure de traitement du gel précurseur, l'excédent d'acide ou de ses dérivés.

Dans la première étape du procédé selon l'invention, il est important de mélanger les réactifs de manière contrôlée afin d'éviter une précipitation ou une gélification de silice et d'éviter que le mélange ne s'échauffe. A cet effet, les réactifs peuvent être mélangés par tout moyen connu adéquat pour autant que la température pendant l'adjonction des réactifs soit au maximum égale à 30 °C et qu'il ne se produise pas de précipitation ni de gélification de silice. De préférence, le mélange est réalisé par addition d'un prémélange comprenant l'eau et l'acide à un prémélange contenant l'alcoolate de silicium et l'alcool. Ceci peut être effectué en ajoutant le prémélange eau/acide au prémélange alcool/ alcoolate de silicium. Une autre méthode consiste à ajouter le prémélange alcool/alcoolate de silicium au prémélange eau/acide. On obtient de bons résultats en ajoutant l'un des prémélanges goutte à goutte dans l'autre prémélange maintenu sous agitation. On obtient des résultats particulièrement satisfaisants en ajoutant le prémélange eau/acide, goutte à goutte et sous agitation, au prémélange alcool/alcoolate de silicium.

Dans la première étape du procédé selon l'invention, on maintient la température, pendant l'addition des réactifs, inférieure à 30 °C, de préférence inférieure à 20 °C, typiquement environ 10 °C, les températures supérieures à 0 °C étant recommandées; ensuite, le milieu d'hydrolyse est soumis à un mûrissage à une température au moins égale à 20 °C et inférieure à la température d'ébullition du milieu, par exemple de 30 à 100 °C, les températures de 40 à 80 °C étant les plus courantes et celles de 50 à 70 °C étant recommandées. De préférence, le mûrissage du milieu d'hydrolyse est réalisé à une température supérieure à celle de l'addition des réactifs.

Dans la première étape du procédé selon l'invention, le mûrissage a pour fonction de permettre une hydrolyse et une condensation progressives de l'alcoolate de silicium selon les réactions définies plus haut. Toutes autres choses restant égales, le taux d'hydrolyse de l'alcoolate est d'autant plus élevé (le nombre x est d'autant plus grand) que la durée du mûrissage est grande. La durée du mûrissage doit dès lors être suffisante pour que la réaction d'hydrolyse telle que décrite plus haut ait lieu; elle doit toutefois être inférieure au temps requis pour qu'une gélification ou une précipitation de silice se produise. La durée optimale du mûrissage dépend du pH du milieu d'hydrolyse, de la nature des réactifs présents dans le milieu d'hydrolyse et de la température, et peut varier de quelques minutes à plusieures dizaines d'heures. En général, la durée ne dépasse pas 24 heures. De préférence, la durée est de 0.5 à 3 heures.

Dans un mode de réalisation particulièrement avantageux du procédé selon l'invention, on met en oeuvre en outre, dans la première étape, un alcoolate de titane. L'alcoolate de titane peut par exemple être un composé dans lequel le titane est lié à au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. L'alcoolate de titane est de préférence soluble dans le milieu d'hydrolyse. L'acétylacétonate de titane convient particulièrement bien. On peut bien entendu mettre en oeuvre plusieurs alcoolates de titane à la première étape du procédé selon l'invention. L'alcoolate de titane peut éventuellement être mis en oeuvre à l'état d'une solution dans un hydrocarbure liquide. Les alcools conviennent bien.

La quantité d'alcoolate de titane mise en oeuvre dans ce mode de réalisation est généralement telle que le titane soit présent dans le gel précurseur en une proportion variant de 0,05 à 20 % en poids, de préférence de 0,1 à 15 % en poids, plus particulièrement de 0,5 à 10 % en poids de titane sur base du poids total de la fraction solide du gel précurseur.

Dans ce mode de réalisation, l'alcoolate de titane peut être mis en oeuvre à tout moment à la première étape. L'alcoolate de titane peut par exemple être ajouté au prémélange comprenant l'eau et l'acide, ou au prémélange contenant l'alcoolate de silicium et l'alcool. En variante, l'alcoolate de titane peut être ajouté au milieu d'hydrolyse obtenu après mélange de l'eau, de l'acide, de l'alcoolate de silicium et de l'alcool, avant, pendant ou après le mûrissage. De bons résultats sont obtenus lorsque l'on ajoute l'alcoolate de titane pendant le mûrissage. On préconise d'ajouter l'alcoolate de titane après une première partie du mûrissage, qui représente avantageusement de 40 à 60 %, par exemple environ 50 %, de la durée totale du mûrissage, la deuxième partie étant effectuée après l'addition de l'alcoolate de titane.

Ce mode de réalisation s'avère spécialement avantageux lorsque l'on souhaite incorporer le titane dans le gel précurseur en une quantité élevée, qui peut aller jusque 20 % en poids du poids total de la fraction solide du gel précurseur, tout en évitant la formation, dans une étape ultérieure, d'agglomérats de dioxyde de titane cristallin sous la forme "anatase" ou "rutile".

Le composé d'aluminium mis en oeuvre à la deuxième étape du procédé selon l'invention peut être tout composé d'aluminium qui est soluble dans la solution acide mise en oeuvre à la deuxième étape et qui est susceptible d'être gélifié sous l'effet d'un agent gélifiant. Spécialement recommandés sont les sels inorganiques d'aluminium et les alcoolates d'aluminium. Parmi les alcoolates d'aluminium, on utilise habituellement ceux dans lesquels l'aluminium est lié à au moins un groupement alkoxy. Parmi les alcoolates d'aluminium, ceux contenant des groupements aliphatiques sont spécialement recommandés; ceux contenant des groupements aliphatiques linéaires saturés non substitués sont préférés, tels que, par exemple, les groupements méthyle, éthyle, n-propyle, iso-propyle, n-butyle et iso-butyle. On utilise de préférence un alcoolate d'aluminium dont les groupements alkoxy contiennent de 1 à 20 atomes de carbone. Les alcoolates d'aluminium dont le groupement alkoxy correspond à celui de l'alcoolate de silicium utilisé, conviennent particulièrement bien.

On obtient des résultats satisfaisants avec les sels inorganiques d'aluminium. Parmi les sels inorganiques d'aluminium, le nitrate et le chlorure d'aluminium sont particulièrement préférés.

Dans une forme d'exécution particulière du procédé selon l'invention, dans laquelle on utilise un alcoolate d'aluminium à titre de composé d'aluminium, on met celui-ci en oeuvre, au moins en partie, à la première étape du procédé selon l'invention, de préférence, le cas échéant, dans le prémélange alcool/alcoolate de silicium. L'alcoolate d'aluminium peut également être ajouté à l'issue de la première étape, après le mûrissage.

Dans le procédé selon l'invention, la source d'ions phosphates désigne tout composé soluble dans la solution mise en oeuvre à la deuxième étape et susceptible d'y former des ions phosphates. Spécialement recommandés sont les sels inorganiques phosphatés [par exemple le phosphate monocalcique de formule $CaH_4(PO_4)_2$, le phosphate disodique de formule $Na_2HPO_4$ et le phosphate tricalcique de formule $Ca_3(PO_4)_2$], les éthers-sels phosphatés [par exemple le phosphate d'éthyle de formule $(C_2H_5)_3PO_4$] et l'acide phosphorique. On utilise de préférence l'acide phosphorique.

La solution acide du composé d'aluminium et la solution de la source d'ions phosphates mise en oeuvre à la deuxième étape du procédé selon l'invention, peuvent être préparées par tout moyen connu adéquat et sont de préférence miscibles avec le mélange obtenu à la première étape du procédé selon l'invention.

Dans une forme d'exécution avantageuse du procédé selon l'invention, la source d'ions phosphates est ajoutée au préalable à la solution acide du composé d'aluminium de manière à ne mettre en oeuvre, à la deuxième étape du procédé selon l'invention, qu'une seule solution, acide, comprenant simultanément le composé d'aluminium et la source d'ions phosphates.

Dans une première variante de cette forme d'exécution du procédé selon l'invention, où la solution acide ne contient que le composé d'aluminium et est exempte de source d'ions phosphates, la solution acide est habituellement obtenue par dissolution du composé d'aluminium dans une quantité d'eau et/ou d'un alcool, suffisante pour assurer une dissolution complète, et en y ajoutant un acide en une quantité suffisante pour éviter la formation d'hydroxyde d'aluminium, qui précipiterait immédiatement et ne participerait dès lors plus à la formation du gel précurseur. On utilise de préférence de l'eau pour dissoudre le composé d'aluminium. En pratique, on n'a pas intérêt à utiliser une quantité de solvant (eau ou alcool) supérieure à la quantité minimale nécessaire, car tout excès de solvant impliquerait de l'éliminer lors du traitement ultérieur de séchage du gel. L'acide mis en oeuvre peut être choisi parmi ceux utilisables dans la première étape du procédé selon l'invention.

Dans une deuxième variante de cette forme d'exécution du procédé selon l'invention, où la solution acide ne contient que la source d'ions phosphates et est exempte de composé d'aluminium, la solution acide est généralement préparée en dissolvant la source d'ions phosphates dans une quantité d'eau et/ou d'alcool suffisante et de préférence sans excès exagéré pour les motifs exposés ci-dessus. Dans cette deuxième variante, la source d'ions phosphates confère un caractère acide à la solution, de sorte qu'il est inutile d'ajouter un acide supplémentaire à la solution.

Dans une troisième variante de cette forme d'exécution du procédé selon l'invention, qui est préférée, la solution contient simultanément le composé d'aluminium et la source d'ions phosphates, et la solution acide est obtenue par dissolution du composé d'aluminium et de la source d'ions phosphates dans un ordre quelconque dans une quantité d'eau et/ou d'alcool suffisante mais sans excès exagéré pour les motifs exposés ci-dessus. Dans cette variante préférée, il peut s'avérer inutile d'y ajouter en outre un acide, à condition que la source d'ions phosphates confère à la solution une acidité suffisante pour éviter la formation d'hydroxyde d'aluminium.

Il va de soi que l'on peut mettre en oeuvre simultanément, à la deuxième étape, plusieurs composés d'aluminium et/ou plusieurs sources d'ions phosphates.

Dans la deuxième étape du procédé selon l'invention, l'addition de la solution acide du composé d'aluminium et de la solution de la source d'ions phosphates au mélange obtenu à la première étape peut par exemple être effectuée en versant le mélange issu de la première étape dans une des deux solutions ou dans le mélange de ces deux solutions (la solution acide du composé d'aluminium et la solution de la source d'ions phosphates). En variante, le mélange des deux solutions peut être ajoutée au mélange issu de la première étape, dans quel cas on préfère opérer de manière très lente pour éviter que le milieu ainsi obtenu s'échauffe, en introduisant le mélange des deux solutions goutte à goutte dans le milieu, sous une forte agitation, le milieu étant thermostatisé à une température inférieure à 30 °C, typiquement inférieure ou égale à 20 °C, par exemple comprise entre 0 et 10 °C pendant toute la durée de l'ajout.

L'agent gélifiant mis en oeuvre à la troisième étape du procédé selon l'invention, est tout composé susceptible de provoquer une cogélification des réactifs mis en oeuvre à la première et la deuxième étape (l'alcoolate de silicium hydrolysé et condensé issu de la première étape et défini plus haut, le composé d'aluminium et/ou la source d'ions phosphates et éventuellement l'alcoolate de titane) sous la forme d'un oxyde mixte de silicium et d'aluminium et/ou de phosphore et éventuellement de titane. On peut citer comme exemple d'agent gélifiant, l'oxyde d'éthylène, le carbonate d'ammonium et l'hydroxyde d'ammonium. On utilise de préférence une solution aqueuse d'hydroxyde d'ammonium.

La quantité d'agent gélifiant mise en oeuvre à la troisième étape est de préférence suffisante pour permettre une gélification complète de l'alcoolate de silicium hydrolysé et condensé défini plus haut, du composé d'aluminium et du composé phosphaté présents dans le milieu de cogélification. Par milieu de cogélification, on entend désigner le mélange réactionnel en cours de gélification à la troisième étape du procédé. Le milieu de cogélification comprend dès lors le milieu obtenu à l'issue de la deuxième étape du procédé selon l'invention (comprenant l'alcoolate de silicium hydrolysé et condensé, le composé d'aluminium et/ou la source d'ions phosphates) et l'agent gélifiant. La quantité d'agent gélifiant mise en oeuvre est avantageusement suffisante pour permettre une cogélification complète de la masse totale d'alcoolate de silicium hydrolysé et condensé, de composé d'aluminium et de source d'ions phosphates; elle est de préférence légèrement supérieure à cette quantité suffisante.

Dans la troisième étape du procédé selon l'invention, le pH du milieu de cogélification est généralement supérieur ou égal à 5, typiquement supérieur ou égal à 6; il est habituellement inférieur à 11, les valeurs inférieures à 10 étant recommandées. De préférence, on maintient le pH constant à une valeur de 6 à 10, par exemple 8, pendant toute la durée de la cogélification. La constance du pH peut être assurée par tout moyen connu adéquat, par exemple en utilisant un tampon inerte vis-à-vis des réactifs en cours de gélification, ou en utilisant une installation permettant une alimentation contrôlée, continue ou discontinue, d'un composé modifiant le pH, dans le milieu de cogélification. On utilise de préférence un récipient contenant l'agent gélifiant, dans lequel on introduit séparément et de manière contrôlée le mélange issu de la deuxième étape et un composé régulateur de pH. On peut employer comme composé régulateur de pH, tout composé acide ou basique, inerte vis-à-vis des réactifs en cours de gélification.

Dans la troisième étape du procédé selon l'invention, il peut s'avérer avantageux, selon les propriétés du gel précurseur qu'on souhaite obtenir, de thermostatiser le milieu de cogélification à une température inférieure ou égale à 30 °C, de préférence à une température de 0 à 20 °C.

Dans une première forme d'exécution particulièrement avantageuse du procédé selon l'invention, on peut en outre incorporer dans le gel précurseur, un métal de transition choisi parmi les éléments des groupes IVB et VB du tableau périodique, tels que le zirconium et le vanadium, ou un élément du groupe IIIA du tableau périodique, différent de l'aluminium, tel que le bore. A cet effet, on ajoute un sel organique ou inorganique ou un alcoolate d'un de ces éléments au mélange obtenu à la première ou à la deuxième étape du procédé selon l'invention, avant d'effectuer l'étape suivante. Le cas échéant, on peut ajouter le sel ou l'alcoolate au prémélange eau/acide ou au prémélange alcool/alcoolate de silicium mis en oeuvre à la première étape du procédé selon l'invention.

Dans une deuxième forme d'exécution du procédé selon l'invention, que l'on préfère, on soumet le gel issu de la troisième étape à une maturation. Celle-ci est réalisée dans un milieu de maturation, qui peut être le milieu de cogélification recueilli de la troisième étape, éventuellement sous agitation. On peut y ajouter un composé inerte modifiant le pH du milieu de maturation, par exemple un composé basique. En variante, le gel est d'abord séparé du milieu de cogélification, par exemple par centrifugation, et ensuite remis en suspension dans un liquide inerte tel que de l'eau ou un alcool pour effectuer la maturation. Cette variante présente l'avantage d'éliminer une partie des impuretés ioniques adsorbées dans le gel, provenant des réactifs mis en oeuvre lors de la fabrication du gel.

La maturation a pour fonction de prolonger la cogélification et ainsi modifier la surface spécifique et le volume poreux du gel. Elle est habituellement effectuée à une température pouvant varier de la température ambiante jusqu'à la température d'ébullition du milieu de maturation. On opère de préférence à environ 20 °C. La durée de la maturation dépend de la température et des propriétés (surface spécifique et volume poreux) requises du support. Elle peut dès lors varier de quelques minutes à plusieurs dizaines d'heures. Les meilleurs résultats sont obtenus avec une durée d'au moins une heure. Pour des considérations d'ordre économique, on n'a pas intérêt à prolonger la maturation au delà de 48 heures.

La maturation est en général effectuée à un pH supérieur ou égal à 6, de préférence de 8 à 10.

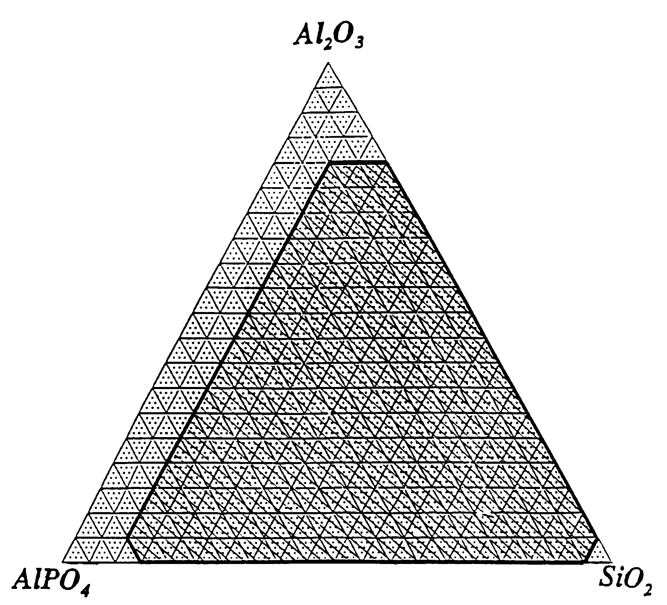

Le procédé selon l'invention permet, moyennant un mode opératoire unique, de préparer des gels précurseur de supports pour catalyseurs, contenant du silicium, de l'aluminium et/ou du phosphore dans une large gamme de concentrations. En effet, le procédé selon l'invention permet de parcourir tout le diagramme ternaire entre la composition de la silice, de l'alumine et du phosphate d'aluminium. La figure annexée représente ce diagramme ternaire des phases. Le procédé selon l'invention apparaît particulièrement performant pour la fabrication de gels dont la fraction sèche a sa composition située dans la partie hachurée dudit diagramme ternaire des phases. Le procédé selon l'invention permet également l'incorporation dans le gel précurseur d'un métal de transition ou d'un élément tel que le bore.

Le procédé selon l'invention permet de préparer des gels qui présentent une dispersion des constituants très homogène, et qui sont aptes à être transformés en supports pour catalyseurs, présentant, en combinaison, une surface spécifique, un volume poreux et une résistance à la cristallisation qui les rendent performants dans la polymérisation d'oléfines.

L'invention a dès lors également pour objet un procédé de préparation d'un support pour catalyseurs, selon lequel on prépare un gel précurseur au moyen du procédé conforme à l'invention tel que décrit ci-dessus, on lave le gel à l'eau et ensuite au moyen d'un liquide organique, puis on le sèche par distillation jusqu'à l'obtention d'une poudre, et on calcine la poudre.

Dans le procédé selon l'invention de préparation d'un support, on soumet le gel à un lavage, d'abord à l'eau et ensuite au moyen d'un liquide organique.

Le lavage à l'eau consiste en général à mettre le gel en suspension dans une quantité d'eau suffisante pour éliminer une partie au moins des impuretés contenues dans le gel, et ensuite à éliminer une partie au moins de cette quantité d'eau par tout moyen connu adéquat, par exemple par centrifugation ou par filtration. On opère de préférence par centrifugation compte tenu de la rapidité de cette méthode. On peut bien entendu répéter ce lavage à l'eau plusieurs fois. La température à laquelle ce lavage est effectué a peu d'influence sur l'efficacité du lavage et peut dès lors varier dans une large mesure. On opère de préférence à température ambiante.

Ensuite, on soumet le gel lavé à l'eau, à un lavage au moyen d'un liquide organique, par exemple en dispersant le gel dans ce liquide organique à température ambiante. Le lavage avec le liquide organique a pour fonction d'éliminer une partie au moins de l'eau qui imprègne le gel. Le liquide organique sélectionné doit être au moins partiellement miscible avec l'eau, inerte vis-à-vis du gel mais toutefois capable de mouiller le gel. Il présente préférentiellement une température de vaporisation inférieure à 120 °C, typiquement inférieure à 100 °C, par exemple de 70 à 90 °C. Des liquides organiques utilisables dans ce lavage sont les alcools, les éthers ou leurs mélanges. Les alcools sont préférés, particulièrement ceux comprenant de 1 à 4 atomes de carbone. L'isopropanol convient bien. On peut bien entendu répéter plusieurs fois ce lavage au moyen d'un liquide organique, et mettre en oeuvre simultanément plusieurs liquides organiques. A l'issue du lavage, il est souhaitable de séparer le gel d'une partie au moins de l'eau et du liquide organique utilisé par centrifugation ou par filtration.

Dans le procédé selon l'invention de préparation d'un support, on soumet le gel lavé à un séchage par distillation afin d'évaporer l'eau et le liquide organique non éliminés précédemment, jusqu'à l'obtention d'une poudre du support. La distillation peut être effectuée sous pression atmosphérique ou sous pression réduite. On opère de préférence à pression atmosphérique.

Dans une variante particulière de cette forme de réalisation, on sélectionne, pour le lavage du gel, un liquide organique qui forme un azéotrope avec l'eau, et, au cours du séchage, on distille d'abord l'azéotrope jusqu'à l'élimination d'au moins 95 %, de préférence au moins 98 % de l'eau et d'une partie du liquide organique, et ensuite le résidu du liquide organique encore présent dans le gel. Dans cette forme de réalisation particulière, selon la quantité d'eau présente dans le gel après le lavage, il est parfois nécessaire d'ajouter une quantité supplémentaire du liquide organique au gel lavé pour permettre une élimination maximale de l'eau sous la forme du mélange azéotropique eau/liquide organique. Dans cette forme de réalisation particulière, on obtient, à l'issue du séchage, une poudre contenant en général une teneur en humidité inférieure à 1 % en poids, de préférence inférieure à 0,5 % en poids, par exemple inférieure à 0,2 % en poids.

A l'issue du séchage par distillation, on recueille une poudre du support, que l'on peut éventuellement passer au tamis pour en séparer les grains de taille non souhaitée. On soumet cette poudre à une calcination. La calcination a pour fonction d'extraire, à température élevée, les impuretés organiques de la poudre. Elle est généralement poursuivie jusqu'à ce que le poids de la poudre reste constant au cours du temps, tout en évitant une cristallisation de la poudre. La calcination peut être effectuée sous air (de préférence sous air sec) dans un lit fluidisé à une température inférieure à la température de cristallisation de la poudre. La température est en général de 300 à 1500 °C, typiquement de 350 à 1000 °C, de préférence de 400 à 600 °C.

Dans le procédé selon l'invention de préparation d'un support, il peut s'avérer souhaitable de soumettre le gel précurseur obtenu à la troisième étape précitée, à un broyage, ensuite à une mise en suspension dans un liquide, suivie d'une pulvérisation de la suspension du gel précurseur en gouttelettes. On peut utiliser à titre de liquide, tout dispersant inerte vis-à-vis du gel, par exemple de l'eau. Les particules recueillies de la pulvérisation sont ensuite soumises successivement à un lavage à l'eau et au moyen d'un liquide organique, à un séchage par distillation et à une calcination, tels que décrits ci-avant. En variante, la pulvérisation peut être effectuée après le lavage à l'eau.

Le procédé selon l'invention de préparation d'un support permet l'obtention de supports contenant des oxydes mixtes de silicium et d'aluminium et/ou de phosphore, présentant une dispersion homogène des constituants, combinant une surface spécifique élevée et un volume poreux élevé, et se présentant à l'état amorphe avec une résistance élevée à la cristallisation.

Vu ses caractéristiques physiques et structurales, le support selon l'invention trouve une application particulièrement intéressante comme support pour catalyseurs dans la polymérisation d'oléfines, le catalyseur consistant avantageusement en oxyde de chrome.

Par ailleurs, les supports préparés à partir d'un gel précurseur contenant en outre du titane obtenu selon le mode de réalisation particulièrement avantageux décrit plus haut, permettent l'obtention de catalyseurs pour la fabrication de polyoléfines de bonnes propriétés mécaniques. En outre, la présence de titane dans le support permet l'obtention de polyoléfines d'indice de fluidité très variable.

L'invention concerne dès lors également un catalyseur pour la polymérisation d'oléfines contenant du chrome sur un support conforme à l'invention, défini plus haut.

Le catalyseur selon l'invention peut être obtenu de manière connue en soi par imprégnation de la poudre de support avec une solution aqueuse ou organique d'un composé du chrome, suivie d'un séchage en atmosphère oxydante. On peut utiliser à cet effet un composé du chrome choisi parmi les sels solubles tels que les oxydes, l'acétate, le chlorure, le sulfate, le chromate et le bichromate en solution aqueuse, ou tel que l'acétylacétonate en solution organique. Après l'imprégnation du support avec le composé du chrome, le support imprégné est habituellement activé en le chauffant à une température de 400 à 1000 °C pour transformer une partie au moins du chrome en chrome hexavalent.

Le catalyseur selon l'invention peut également être obtenu au moyen d'un mélange mécanique de la poudre du support avec un composé solide du chrome, par exemple de l'acétylacétonate de chrome. Ensuite, ce mélange peut être préactivé à une température inférieure à la température de fusion du composé du chrome avant de l'activer conventionnellement comme décrit ci-dessus.

En variante, le composé du chrome peut également être incorporé à la poudre du support pendant la fabrication de celle-ci ou pendant la fabrication du gel précurseur de ce support. A cet effet, il peut par exemple être ajouté, en partie ou en totalité, à la solution acide du composé d'aluminium et/ou de la source d'ions phosphates mise en oeuvre à la deuxième étape du procédé selon l'invention de fabrication d'un gel précurseur de manière à coprécipiter l'oxyde de chrome simultanément avec l'oxyde de silicium, d'aluminium et/ou de phosphore. On peut également ajouter le composé du chrome au gel précurseur avant ou après le mûrissage de celui-ci.

Dans le catalyseur selon l'invention, le chrome est généralement présent en proportion variant de 0,05 à 10 % en poids, de préférence de 0,1 à 5 % en poids, plus particulièrement de 0,25 à 2 % en poids de chrome sur base du poids total du catalyseur.

Le catalyseur selon l'invention apparaît particulièrement performant dans la polymérisation d'oléfines. En effet, pour cette application, le catalyseur selon l'invention présente l'ensemble des avantages suivants :

- une activité catalytique élevée même en l'absence d'un cocatalyseur,
- une période d'induction faible, voire nulle,
- une bonne réponse à l'hydrogène;

il permet en outre l'obtention de polyoléfines ayant :

- une distribution des masses moléculaires modulable de moyennement large à très large pour un indice de fluidité donné, et
- une teneur faible en oligomères.

Le catalyseur selon l'invention peut être utilisé pour la polymérisation d'oléfines contenant de 2 à 8 atomes de carbone par molécule, et en particulier, pour la production d'homopolymères de l'éthylène ou de copolymères de l'éthylène avec un ou plusieurs comonomères sélectionnés parmi les oléfines décrites ci-dessus. De préférence, ces comonomères sont le propylène, le 1-butène, le 1-pentène, le 3-méthyl-1-butène, le 1-hexène, les 3- et 4- méthyl-1-pentènes et le 1-octène. Des dioléfines comprenant de 4 à 18 atomes de carbone peuvent également être copolymérisées avec l'éthylène. De préférence, les dioléfines sont des dioléfines aliphatiques non conjuguées telles que le 4-vinylcyclohexène ou des dioléfines alicycliques ayant un pont endocyclique telles que le dicyclopentadiène, le méthylène- et l'éthylidène-norbornène, et des dioléfines aliphatiques conjuguées telles que le 1,3-butadiène, l'isoprène et le 1,3-pentadiène.

Le catalyseur selon l'invention convient particulièrement bien pour la fabrication d'homopolymères de l'éthylène et de copolymères contenant au moins 90 %, de préférence au moins 95 % en poids d'éthylène. Les comonomères préférés sont le propylène, le 1-butène, le 1-hexène ou le 1-octène.

L'invention concerne dès lors également un procédé pour la polymérisation d'oléfines telles que définies plus haut, mettant en oeuvre un catalyseur conforme à l'invention. Dans le procédé de polymérisation selon l'invention, la polymérisation peut être effectuée indifféremment en solution, en suspension dans un diluant hydrocarboné ou encore en phase gazeuse. On obtient de bons résultats dans les polymérisations en suspension.

La polymérisation en suspension est effectuée dans un diluant hydrocarboné tel que les hydrocarbures aliphatiques, cycloaliphatiques et aromatiques liquides, à une température telle qu'au moins 80 % (de préférence au moins 90 %) du polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentane et le cyclohexane ou leurs mélanges.

La température de polymérisation est choisie généralement entre 20 et 200 °C, de préférence entre 50 et 150 °C, en particulier entre 80 et 115 °C. La pression d'éthylène est choisie le plus souvent entre la pression atmosphérique et 5 MPa, de préférence entre 0,4 et 2 MPa, plus particulièrement entre 0,6 et 1,5 MPa.

La polymérisation peut être effectuée en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs.

Les exemples 1 à 6 dont la description suit, servent à illustrer l'invention. Dans ces exemples on a d'abord préparé des gels précurseurs de supports pour catalyseurs. On a ensuite utilisé ces gels pour préparer les supports. Puis on a appliqué des catalyseurs sur ces supports. On a employé les catalyseurs supportés ainsi obtenus, pour polymériser de l'éthylène.

Dans les exemples 5 et 6, du titane a été incorporé dans le gel précurseur.

La signification des symboles utilisés exprimant les grandeurs mentionnées et les méthodes de mesure de ces grandeurs sont explicitées ci-dessous.

SS = surface spécifique du support mesurée par la méthode de pénétration à l'azote selon la méthode volumétrique de la norme britannique BS 4359/1 (1984).

VP = volume poreux du support, égal à la somme du volume poreux constitué de pores de rayon inférieur ou égal à 75 Å, mesuré par la méthode de pénétration à l'azote selon la méthode volumétrique de la norme britannique BS 4359/1 (1984), et du volume poreux mesuré par la méthode de pénétration au mercure au moyen du porosimètre du type PORO 2000 commercialisé par CARLO ERBA CO, selon la norme belge NBN B 05-202 (1976).

$T_c =$     température de cristallisation déterminée au moyen de la méthode définie plus haut.

F0 =     fraction en oligomères du polymère, exprimée en gramme d'oligomères par kilo de polymère et mesurée par extraction à l'hexane à la température d'ébullition de l'hexane.

$\alpha =$     activité catalytique exprimée en grammes de polymère, obtenus par heure et par gramme de catalyseur mis en oeuvre et divisés par la pression partielle de l'oléfine exprimée en bar.

$T_{ind} =$     temps d'induction, exprimé en minutes et défini comme étant le temps écoulé entre l'introduction de l'éthylène et l'apparition d'une diminution de pression caractéristique du début de la polymérisation.

HLMI =     indice de fluidité du polymère fondu à 190 °C, mesuré sous une charge de 21,6 kg et exprimé en g/10 min, suivant la norme ASTM D 1238 (1986).

$\eta_0/\eta_2 =$     rapport entre la viscosité dynamique ($\eta_0$), exprimée en dPa.s et mesurée à un gradient de vitesse de 1 $s^{-1}$ et à 190 °C, et la viscosité dynamique ($\eta_2$), exprimée en dPa.s et mesurée à un gradient de vitesse de 100 $s^{-1}$ et à 190 °C.

Exemples 1 à 4 (conformes à l'invention)

A. Préparation d'un gel précurseur

a) Première étape

On a ajouté, goutte à goutte, à une solution de tétra-éthylate de silicium et d'éthanol, thermostatisée à 10 °C, une solution d'eau et d'acide chlorhydrique 1 M, de telle manière à obtenir une concentration en $H^+$ de 0,1 M. Les quantités de tétra-éthylate de silicium, d'éthanol, d'eau et d'acide chlorhydrique qui ont été mises en oeuvre, sont présentées dans le tableau I. Ensuite, on a soumis le milieu d'hydrolyse ainsi obtenu à un mûrissage à 60 °C pendant 2 heures.

b) Deuxième étape

On a préparé une solution aqueuse contenant du chlorure d'aluminium hydraté et de l'acide phosphorique, les quantités mises en oeuvre étant représentées dans le tableau I. Ensuite, on a ajouté la solution ainsi obtenue au milieu d'hydrolyse obtenu en (a), sous agitation vigoureuse et à 10 °C.

c) Troisième étape

On a ajouté à 500 g d'une solution aqueuse d'hydroxyde d'ammonium de pH 8 thermostatisée à 10 °C, le mélange obtenu en (b), en maintenant le pH constant à une valeur de 8, afin d'effectuer une gélification.

d) Maturation

On a soumis le gel obtenu en (c) à une maturation à pH 8, pendant 2 heures, sous légère agitation et à 60 °C.

B. Préparation d'un support de catalyseur

a) Lavage

On a lavé le gel obtenu en A d'abord 3 fois à l'eau, puis 1 fois au moyen d'isopropanol.

b) Séchage

On a soumis le gel lavé obtenu en (a) à une distillation de l'azéotrope eau-isopropanol à pression ambiante, puis de l'isopropanol d'abord à pression ambiante et ensuite à pression réduite, de manière à obtenir une poudre dont la teneur en humidité est inférieure à 1 % en poids.

c) Calcination

On a calciné la poudre obtenue en (b) dans un lit fluidisé sous balayage d'air sec, pendant 4 heures à 500 °C. On a recueilli une poudre d'un support dont la composition (% molaire de silice, d'alumine et de phosphate d'aluminium), la surface spécifique, le volume poreux et la température de cristallisation sont représentés dans le tableau I.

Tableau I

| Exemple | 1 | 2 | 3 | 4 |
|---|---|---|---|---|
| Première étape : | | | | |
| quantité mise en oeuvre de : | | | | |
| tétra-éthylate de silicium (g) | 43,4 | 60,8 | 23,2 | 4,96 |
| éthanol (g) | 52,1 | 70,9 | 27,8 | 5,95 |
| eau (g) | 23,1 | 32,5 | 12,3 | 2,63 |
| acide chlorhydrique 1 M (g) | 15,0 | 20,7 | 8,0 | 1,71 |
| Deuxième étape : | | | | |
| quantité mise en oeuvre de : | | | | |
| $AlCl_3.6H_2O$ (g) | 30,2 | 10,1 | 53,7 | 74,73 |
| acide phosphorique de 85 % (g) | 14,0 | 4,8 | - | 2,74 |
| eau (g) | 24,5 | 8,8 | - | 61,9 |
| acide chlorhydrique de pH 0,8 (g) | - | - | 50,0 | - |
| Support obtenu : | | | | |
| composition : $SiO_2$ (% mol) | 64,3 | 91,1 | 50,0 | 10,3 |
| $Al_2O_3$ (% mol) | 2,6 | 4,6 | 50,0 | 76,6 |
| $AlPO_4$ (% mol) | 33,1 | 4,3 | - | 13,1 |
| SS ($m^2/g$) | 240 | 601 | 422 | 358 |
| VP ($cm^3/g$) | 3,58 | 2,79 | 2,46 | 2,69 |
| $T_c$ (°C) | > 1000 | > 700 | > 1000 | > 700 |

C. Préparation d'un catalyseur

On a mélangé le support obtenu en B avec de l'acétylacétonate de chrome en une quantité telle que le mélange comprenne 0,7 % en poids de chrome. Puis, on a traité le mélange ainsi obtenu dans un lit fluidisé à 150 °C pendant 2 heures sous balayage d'air sec. Ensuite, on l'a calciné dans le lit fluidisé à 700 °C pendant 5 heures sous air sec, et on a recueilli le catalyseur.

D. Polymérisation de l'éthylène

a) Polymérisation en l'absence d'hydrogène

Dans un autoclave de 3 litres, préalablement séché et muni d'un agitateur, on a introduit 100 mg du catalyseur obtenu en C et 1 litre d'isobutane. La température a été élevée à 99 °C et de l'éthylène a été introduit dans l'autoclave à une pression partielle de 1,09 MPa. La pression d'éthylène et la température ont été maintenues constantes durant le temps nécessaire à la production d'une quantité définie de polyéthylène. Après dégazage, le polymère a été récupéré sous forme de particules, dont les propriétés sont rassemblées dans le tableau II, ainsi que l'activité du catalyseur.

b) Polymérisation en présence d'hydrogène

Les mêmes opérations ont été répétées en introduisant en outre de l'hydrogène dans l'autoclave à une pression partielle de 0,44 MPa. Les résultats obtenus sont également repris dans le tableau II.

Tableau II

| Exemple | 1 | 2 | 3 | 4 |
|---|---|---|---|---|
| a) Sans $H_2$ | | | | |
| $\alpha$ | 44045 | 40660 | 22724 | 8970 |
| $T_{ind}$ | 0 | 8 | 8 | 0 |
| HLMI | 0,6 | 2,2 | < 0,1 | < 0,1 |
| F0 | 8,9 | 7,1 | 5,5 | 9,0 |

**EP 0 700 404 B1**

Tableau II (suite)

| Exemple | 1 | 2 | 3 | 4 |
|---|---|---|---|---|
| $\eta_0/\eta_2$ | 23,6 | 16,1 | - | 47,7 |
| b) avec $H_2$ HLMI | 2,1 | 4,2 | 0,3 | 0,5 |

Exemples 5 et 6 (conformes à l'invention)

A. Préparation d'un gel précurseur

a) Première étape

On a ajouté, goutte à goutte, à une solution de tétra-éthylate de silicium et d'éthanol, thermostatisée à 10 °C, une solution d'eau et d'acide chlorhydrique 1 M, de telle manière à obtenir une concentration en $H^+$ de 0,1 M. Les quantités de tétra-éthylate de silicium, d'éthanol, d'eau et d'acide chlorhydrique qui ont été mises en oeuvre, sont présentées dans le tableau III. Ensuite, on a soumis le milieu d'hydrolyse ainsi obtenu à un mûrissage à 60 °C pendant 1 heure. Puis, on y a ajouté une solution d'acétylacétonate de titane dans l'isopropanol en une quantité appropriée pour obtenir la teneur en Ti indiquée dans le tableau III. Le mûrissage a été poursuivi pendant encore 1 heure à 60 °C au cours duquel on a maintenu le pH à 1 en y ajoutant une quantité adéquate d'acide chlorhydrique.

b) Deuxième étape

On a préparé une solution aqueuse contenant du chlorure d'aluminium hydraté et de l'acide phosphorique, les quantités mises en oeuvre étant représentées dans le tableau III. Ensuite, on a ajouté la solution ainsi obtenue au milieu d'hydrolyse obtenu en (a), sous agitation vigoureuse et à 10 °C.

c) Troisième étape

On a ajouté à 500 g d'une solution aqueuse d'hydroxyde d'ammonium de pH 8 thermostatisée à 10 °C, le mélange obtenu en (b), en maintenant le pH constant à une valeur de 8, afin d'effectuer une gélification.

d) Maturation

On a soumis le gel obtenu en (c) à une maturation à pH 8, pendant 2 heures, sous légère agitation et à 60 °C.

B. Préparation d'un support de catalyseur

a) Lavage

On a lavé le gel obtenu en A d'abord 3 fois à l'eau, puis 1 fois au moyen d'isopropanol.

b) Séchage

On a soumis le gel lavé obtenu en (a) à une distillation de l'azéotrope eau-isopropanol à pression ambiante, puis de l'isopropanol d'abord à pression ambiante et ensuite à pression réduite, de manière à obtenir une poudre dont la teneur en humidité est inférieure à 1 % en poids.

c) Calcination

On a calciné la poudre obtenue en (b) dans un lit fluidisé sous balayage d'air sec, pendant 4 heures à 500 °C. On a recueilli une poudre d'un support dont la composition (% molaire de silice, d'alumine et de phosphate d'aluminium), la surface spécifique, le volume poreux et la température de cristallisation sont représentés dans le tableau III.

Tableau III

| Exemple | 5 | 6 |
|---|---|---|
| Première étape :<br>quantité mise en oeuvre de : | | |
| tétra-éthylate de silicium (g) | 33,0 | 32,3 |
| éthanol (g) | 39,6 | 38,8 |
| eau (g) | 17,7 | 17,5 |
| acide chlorhydrique 1 M (g) | 11,0 | 10,8 |
| acétylacétonate de titane (*) | 8,1 | 16,7 |
| Deuxième étape :<br>quantité mise en oeuvre de : | | |
| $AlCl_3.6H_2O$ (g) | 38,2 | 37,5 |
| acide phosphorique de 85 % (g) | 18,3 | 17,9 |
| eau (g) | 31,9 | 31,0 |
| Support obtenu :<br>composition : Si (% en poids) | 13,9 | 13,2 |
| Al (% en poids) | 14,0 | 12,7 |
| P (% en poids) | 15,5 | 15,1 |
| Ti (% en poids) | 3,0 | 6,7 |
| SS ($m^2$/g) | 349 | 300 |
| VP ($cm^3$/g) | 4,87 | 3,88 |
| $T_c$ (°C) | > 900 | > 700 |

(*) solution à 75 % dans l'isopropanol

## C. Préparation d'un catalyseur

On a mélangé le support obtenu en B avec de l'acétylacétonate de chrome en une quantité telle que le mélange comprenne 0,63 % en poids de chrome. Puis, on a traité le mélange ainsi obtenu dans un lit fluidisé à 150 °C pendant 2 heures sous balayage d'air sec. Ensuite, on l'a calciné dans le lit fluidisé à 700 °C pendant 5 heures sous air sec, et on a recueilli le catalyseur.

## D. Polymérisation de l'éthylène

Dans un autoclave de 3 litres, préalablement séché et muni d'un agitateur, on a introduit 100 mg du catalyseur obtenu en C et 1 litre d'isobutane. La température a été élevée à 104 °C et de l'éthylène a été introduit dans l'autoclave à une pression partielle telle qu'indiquée dans le tableau IV. On a éventuellement introduit en outre de l'hydrogène dans l'autoclave à une pression telle qu'indiquée dans le tableau IV. La pression d'éthylène et la température ont été maintenues constantes durant le temps nécessaire à la production d'une quantité définie de polyéthylène. Après dégazage, le polymère a été récupéré sous forme de particules, dont les propriétés sont rassemblées dans le tableau IV, ainsi que l'activité du catalyseur.

Tableau IV

| Exemple | 5 | 6 |
|---|---|---|
| pression partielle éthylène (MPa) | 0,77 | 0,79 |
| pression partielle $H_2$ (MPa) | - | 0,29 |
| $\alpha$ | 30636 | 20646 |
| $T_{ind}$ | 7 | non mesuré |
| HLMI | 32 | 74 |
| FO | 15 | non mesuré |
| $\eta_0/\eta_2$ | 8,24 | non mesuré |

**Revendications**

1. Support pour catalyseurs, contenant de la silice, du phosphate d'aluminium et éventuellement de l'alumine, caractérisé en ce qu'il présente une surface spécifique de 100 à 800 m$^2$/g, une température de cristallisation supérieure ou égale à 700 °C, un volume poreux de 1,5 à 4 cm$^3$/g, la surface spécifique (SS) et le volume poreux (VP) répondant à la relation suivante :

$$SS < (VP \times 564 - 358),$$

dans laquelle SS et VP désignent respectivement les valeurs numériques de la surface spécifique exprimée en m$^2$/g et du volume poreux exprimé en cm$^3$/g.

2. Support selon la revendication 1 caractérisé en ce qu'il consiste en deux constituants dont l'un est la silice (A) et l'autre (B) le phosphate d'aluminium, dans un pourcentage molaire (A):(B) de (10 à 95):(90 à 5).

3. Support selon la revendication 1 caractérisé en ce qu'il contient de la silice (X), de l'alumine (Y) et du phosphate d'aluminium (Z) dans un pourcentage molaire (X):(Y):(Z) de (10 à 95):(1 à 80):(1 à 85).

4. Support selon l'une quelconque des revendications 1 à 3, caractérisé en ce qu'il contient en outre du titane en une quantité, exprimée en TiO$_2$, de 0,1 à 40 % mol.

5. Support selon l'une quelconque des revendications 1 à 4, caractérisé en ce qu'il présente une masse volumique standard de 50 à 500 kg/m$^3$.

6. Procédé pour la fabrication d'un gel précurseur d'un support pour catalyseurs, selon lequel on mélange, dans une première étape, un alcool, de l'eau, un alcoolate de silicium et un acide en des quantités telles que le rapport molaire eau/silicium soit de 2 à 50, on ajoute au milieu d'hydrolyse ainsi obtenu, dans une deuxième étape, une solution acide d'un composé d'aluminium et/ou une solution d'une source d'ions phosphates, et, dans une troisième étape, un agent gélifiant, caractérisé en ce que la première étape est réalisée à pH acide, et comprend, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une précipitation ou gélification de silice.

7. Procédé selon la revendication 6, caractérisé en ce que l'alcoolate de silicium est un alcoolate de silicium aliphatique.

8. Procédé selon la revendication 7, caractérisé en ce que l'alcoolate de silicium est le tétra-éthylate de silicium.

9. Procédé selon l'une quelconque des revendications 6 à 8, caractérisé en ce que l'acide mis en oeuvre à la première étape est l'acide chlorhydrique.

10. Procédé selon l'une quelconque des revendications 6 à 9, caractérisé en ce que, dans la première étape, on met en oeuvre en outre un alcoolate de titane.

11. Procédé selon la revendication 10, caractérisé en ce que l'alcoolate de titane est ajouté pendant le mûrissage.

12. Procédé selon la revendication 10 ou 11, caractérisé en ce que l'alcoolate de titane est l'acétylacétonate de titane.

13. Procédé selon l'une quelconque des revendications 6 à 12, caractérisé en ce que le composé d'aluminium est sélectionné parmi les sels inorganiques d'aluminium et les alcoolates d'aluminium.

14. Procédé selon la revendication 13, caractérisé en ce que les sels inorganiques d'aluminium sont choisis parmi le nitrate et le chlorure d'aluminium.

15. Procédé selon l'une quelconque des revendications 6 à 14, caractérisé en ce que la source d'ions phosphates est de l'acide phosphorique.

**16.** Procédé selon l'une quelconque des revendications 6 à 15, caractérisé en ce que l'agent gélifiant est une solution aqueuse d'hydroxyde d'ammonium.

**17.** Procédé selon l'une quelconque des revendications 6 à 16, caractérisé en ce que, dans la première étape, on réalise le mûrissage à une température de 50 à 70 °C.

**18.** Procédé selon l'une quelconque des revendications 6 à 17, caractérisé en ce que la deuxième étape est réalisée à une température inférieure ou égale à 20 °C.

**19.** Procédé selon l'une quelconque des revendications 6 à 18, caractérisé en ce que la troisième étape est effectuée dans un milieu de pH constant dont la valeur est de 6 à 10, et à une température inférieure ou égale à 30 °C.

**20.** Procédé selon l'une quelconque des revendications 6 à 19, caractérisé en ce qu'on recueille, à l'issue de la troisième étape, un gel que l'on soumet à une maturation.

**21.** Procédé selon la revendication 20, caractérisé en ce que la maturation du gel est effectuée à une température pouvant varier de la température ambiante à la température d'ébullition du milieu de maturation, et à un pH supérieur ou égal à 6.

**22.** Procédé de préparation d'un support pour catalyseurs selon lequel on prépare un gel précurseur au moyen du procédé conforme à l'une quelconque des revendications 6 à 21, on lave le gel à l'eau et ensuite au moyen d'un liquide organique, puis on le sèche par distillation jusqu'à l'obtention d'une poudre, et on calcine la poudre.

**23.** Procédé selon la revendication 22, caractérisé en ce que le liquide organique est sélectionné parmi les alcools.

**24.** Procédé selon la revendication 23, caractérisé en ce que le liquide organique est de l'alcool isopropylique.

**25.** Procédé selon l'une quelconque des revendications 22 à 24, caractérisé en ce que le séchage est réalisé par distillation d'un mélange azéotropique d'eau et du liquide organique jusqu'à élimination d'au moins 98 % de l'eau et d'une partie du liquide organique, suivie d'une distillation de l'autre partie du liquide organique.

**26.** Catalyseur pour la polymérisation d'oléfines contenant du chrome sur un support conforme à l'une quelconque des revendications 1 à 5.

**27.** Procédé pour la polymérisation d'oléfines selon lequel on met en oeuvre un catalyseur conforme à la revendication 26.

**28.** Procédé selon la revendication 27 appliqué à la polymérisation de l'éthylène.

**Patentansprüche**

**1.** Katalysatorträger, der Siliziumdioxid, Aluminiumphosphat und gegebenenfalls Aluminiumoxid enthält, dadurch gekennzeichnet, daß er eine spezifische Oberfläche von 100 bis 800 m$^2$/g, eine Kristallisationstemperatur höher oder gleich 700 °C, ein Porenvolumen von 1,5 bis 4 cm$^3$/g aufweist, wobei die spezifische Oberfläche (SS) und das Porenvolumen (VP) der folgenden Beziehung entsprechen:

$$SS < (VP \times 564 - 358),$$

in der SS und VP die numerischen Werte der in m$^2$/g ausgedrückten spezifischen Oberfläche beziehungsweise des in cm$^3$/g ausgedrückten Porenvolumens bezeichnen.

**2.** Träger gemäß Anspruch 1, dadurch gekennzeichnet, daß er aus zwei Bestandteilen, von denen der eine das Siliziumdioxid (A) und der andere (B) das Aluminiumphosphat ist. in einem Molprozentsatz (A):(B) von (10 bis 95): (90 bis 5) besteht.

**3.** Träger gemaß Anspruch 1, dadurch gekennzeichnet, daß er Siliziumdioxid (X), Aluminiumoxid (Y) und Aluminiumphosphat (Z) in einem Molprozentsatz (X):(Y):(Z) von (10 bis 95):(1 bis 80):(1 bis 85) enthält.

**4.** Träger gemäß einem der Ansprüche 1 bis 3, dadurch gekennzeichnet, daß er außerdem Titan in einer Menge, ausgedrückt als $TiO_2$, von 0,1 bis 40 Mol-% enthält.

**5.** Träger gemäß einem der Ansprüche 1 bis 4, dadurch gekennzeichnet, daß er eine Standard-Dichte von 50 bis 500 kg/m$^3$ aufweist.

**6.** Verfahren zur Herstellung eines Katalysatorträgervorläufergels, gemäß dem man in einem ersten Schritt einen Alkohol, Wasser, ein Siliziumalkoholat und eine Säure in solchen Mengen mischt, daß das Molverhältnis Wasser/Silizium 2 bis 50 beträgt, man dem so erhaltenen Hydrolysemedium in einem zweiten Schritt eine saure Lösung einer Aluminiumverbindung und/oder eine Lösung einer Phosphationenquelle und in einem dritten Schritt ein Geliermittel hinzufügt, dadurch gekennzeichnet, daß der erste Schritt bei saurem pH durchgeführt wird und einerseits die Zugabe des Wassers, der Säure, des Siliziumalkoholats und des Alkohols, wobei die Temperatur während der Zugabe kleiner oder gleich 30 °C ist, und andererseits ein Reifen des so erhaltenen Hydrolysemediums bei einer Temperatur, die wenigstens gleich 20 °C und niedriger als die Siedetemperatur des Mediums ist, umfaßt, so daß wenigstens ein Teil der Alkoxygruppen des Siliziumalkoholats durch Hydroxygruppen ersetzt wird. ohne daß ein Ausfällen oder Gelieren von Siliziumdioxid erfolgt.

**7.** Verfahren gemäß Anspruch 6, dadurch gekennzeichnet, daß das Siliziumalkoholat ein aliphatisches Siliziumalkoholat ist.

**8.** Verfahren gemäß Anspruch 7, dadurch gekennzeichnet, daß das Siliziumalkoholat Siliziumtetraethylat ist.

**9.** Verfahren gemäß einem der Ansprüche 6 bis 8, dadurch gekennzeichnet, daß die im ersten Schritt verwendete Säure Salzsäure ist.

**10.** Verfahren gemäß einem der Ansprüche 6 bis 9, dadurch gekennzeichnet, daß man im ersten Schritt außerdem ein Titanalkoholat verwendet.

**11.** Verfahren gemäß Anspruch 10, dadurch gekennzeichnet, daß das Titanalkoholat während des Reifens hinzugefügt wird.

**12.** Verfahren gemäß Anspruch 10 oder 11, dadurch gekennzeichnet, daß das Titanalkoholat Titanacetylacetonat ist.

**13.** Verfahren gemäß einem der Ansprüche 6 bis 12, dadurch gekennzeichnet, daß die Aluminiumverbindung unter den anorganischen Aluminiumsalzen und den Aluminiumalkoholaten ausgewählt ist.

**14.** Verfahren gemäß Anspruch 13, dadurch gekennzeichnet, daß die anorganischen Aluminiumsalze unter Aluminiumnitrat und -chlorid ausgewählt sind.

**15.** Verfahren gemäß einem der Ansprüche 6 bis 14, dadurch gekennzeichnet, daß die Phosphationenquelle Phosphorsäure ist.

**16.** Verfahren gemäß einem der Ansprüche 6 bis 15, dadurch gekennzeichnet, daß das Geliermittel eine wäßrige Ammoniumhydroxidlösung ist.

**17.** Vefahren gemäß einem der Ansprüche 6 bis 16, dadurch gekennzeichnet, daß man im ersten Schritt das Reifen bei einer Temperatur von 50 bis 70 °C durchführt.

**18.** Verfahren gemäß einem der Ansprüche 6 bis 17, dadurch gekennzeichnet. daß der zweite Schritt bei einer Temperatur kleiner oder gleich 20 °C durchgeführt wird.

**19.** Verfahren gemäß einem der Ansprüche 6 bis 18, dadurch gekennzeichnet. daß der dritte Schritt in einem Medium mit konstantem pH, dessen Wert 6 bis 10 beträgt, und bei einer Temperatur kleiner oder gleich 30 °C ausgeführt wird.

20. Verfahren gemäß einem der Ansprüche 6 bis 19, dadurch gekennzeichnet, daß man am Ende des dritten Schritts ein Gel gewinnt, das man einer Reifung unterzieht.

21. Verfahren gemäß Anspruch 20, dadurch gekennzeichnet, daß die Reifung des Gels bei einer Temperatur, die von der Raumtemperatur bis zur Siedetemperatur des Reifungsmediums variieren kann, und bei einem pH-Wert größer oder gleich 6 ausgeführt wird.

22. Verfahren zur Herstellung eines Katalysatorträgers, gemäß dem man ein Vorläufergel mittels des Verfahrens gemäß einem der Ansprüche 6 bis 21 herstellt, man das Gel mit Wasser und dann mit einer organischen Flüssigkeit wäscht, man es danach durch Destillation bis zum Erhalt eines Pulvers trocknet und man das Pulver glüht.

23. Verfahren gemäß Anspruch 22, dadurch gekennzeichnet, daß die organische Flüssigkeit unter den Alkoholen ausgewählt ist.

24. Verfahren gemäß Anspruch 23, dadurch gekennzeichnet, daß die organische Flüssigkeit Isopropylalkohol ist.

25. Verfahren gemäß einem der Ansprüche 22 bis 24, dadurch gekennzeichnet, daß das Trocknen durch Destillation eines azeotropen Gemisches von Wasser und der organischen Flüssigkeit bis zur Entfernung von wenigstens 98% des Wassers und eines Teils der organischen Flüssigkeit und eine anschließende Destillation des anderen Teils der organischen Flüssigkeit durchgeführt wird.

26. Katalysator für die Olefinpolymerisation, der Chrom auf einem Träger gemäß einem der Ansprüche 1 bis 5 enthält.

27. Verfahren zur Olefinpolymerisation, gemäß dem man einen Katalysator gemäß Anspruch 26 verwendet.

28. Verfahren gemäß Anspruch 27, angewendet auf die Polymerisation von Ethylen.


## Claims

1. Support for catalysts, containing silica, aluminium phosphate and optionally alumina, characnerized in that it has a specific surface of 100 to 800 $m^2/g$, a crystallization temperature greater than or equal to 700°C and a pore volume of 1.5 to 4 $cm^3/g$, the specific surface (SS) and the pore volume (PV) corresponding to the following relationship:

$$SS < (PV \times 564 - 358),$$

in which SS and PV respectively denote the numerical values of the specific surface, expressed in $m^2/g$, and of the pore volume, expressed in $cm^3/g$.

2. Support according to Claim 1, characterized in that it consists of two constituents, one of which is silica (A) and the other (B) aluminium phosphate, in an (A):(B) molar percentage of (10 to 95):(90 to 5).

3. Support according to Claim 1, characterized in that it contains silica (X), alumina (Y) and aluminium phosphate (Z), in an (X) : (Y) : (Z) molar percentage of (10 to 95):(1 to 80):(1 to 85).

4. Support according to any one of Claims 1 to 3, characterized in that it additionally contains titanium in an amount, expressed as $TiO_2$, of 0.1 to 40 mol %.

5. Support according to any one of Claims 1 to 4, characterized in that it has a standard density of 50 to 500 $kg/m^3$.

6. Process for the manufacture of a precursor gel of a support for a catalyst, according to which, in a first stage, an alcohol, water, a silicon alkoxide and an acid are mixed in amounts such that the water/silicon molar ratio is from 2 to 50, an acidic solution of an aluminium compound and/or a solution of a source of phosphate ions, in a second stage, and, in a third stage, a gelling agent are added to the hydrolysis medium thus obtained, characterized in that the first stage is carried out at acid pH and comprises, on the one hand, the addition of water, acid, silicon alkoxide and alcohol, the temperature, during the addition, being less than or equal to 30°C and, on the other hand, a maturing of the hydrolysis medium thus obtained at a temperature at least equal to 20°C and lower than the boiling temperature of the medium, so as to substitute at least part of the alkoxy groups of the silicon alkoxide by hydroxyl groups, without producing precipitation or gelling of silica.

7. Process according to Claim 6, characterized in that the silicon alkoxide is an aliphatic silicon alkoxide.

8. Process according to Claim 7, characterized in that the silicon alkoxide is silicon tetraethoxide.

9. Process according to any one of Claims 6 to 8, characterized in that the acid used in the first stage is hydrochloric acid.

10. Process according to any one of Claims 6 to 9, characterized in that, in the first stage, a titanium alkoxide is additionally used.

11. Process according to Claim 10, characterized in that the titanium alkoxide is added during the maturing.

12. Process according to Claim 10 or 11, characterized in that the titanium alkoxide is titanium acetylacetonate.

13. Process according to any one of Claims 6 to 12, characterized in that the aluminium compound is selected from inorganic aluminium salts and aluminium alkoxides.

14. Process according to Claim 13, characterized in that the inorganic aluminium salts are chosen from aluminium nitrate and chloride.

15. Process according to any one of Claims 6 to 14, characterized in that the source of phosphate ions is phosphoric acid.

16. Process according to any one of Claims 6 to 15, characterized in that the gelling agent is an aqueous ammonium hydroxide solution.

17. Process according to any one of Claims 6 to 16, characterized in that, in the first stage, the maturing is carried out at a temperature of 50 to 70°C.

18. Process according to any one of Claims 6 to 17, characterized in that the second stage is carried out at a temperature below or equal to 20°C.

19. Process according to any one of Claims 6 to 18, characterized in that the third stage is carried out in a medium with a constant pH, the value of which is from 6 to 10, and at a temperature below or equal to 30°C.

20. Process according to any one of Claims 6 to 19, characterized in that, on conclusion of the third stage, a gel is recovered which is subjected to a maturing.

21. Process according to Claim 20, characterized in that the maturing of the gel is carried out at a temperature which can vary from room temperature to the boiling temperature of the maturing medium and at a pH greater than or equal to 6.

22. Process for the preparation of a support for catalysts, according to which a precursor gel is prepared by means of the process in accordance with any one of Claims 6 to 21, the gel is washed with water and then by means of an organic liquid, it is then dried by distillation until a powder is obtained, and the powder is calcined.

23. Process according to Claim 22, characterized in that the organic liquid is selected from alcohols.

24. Process according to Claim 23, characterized in that the organic liquid is isopropyl alcohol.

25. Process according to any one of Claims 22 to 24, characterized in that the drying is carried out by distillation of an azeotropic mixture of water and of the organic liquid until at least 98% of the water and part of the organic liquid have been removed, followed by a distillation of the other part of the organic liquid.

26. Catalyst for the polymerization of olefins containing chromium on a support in accordance with any one of Claims 1 to 5.

27. Process for the polymerization of olefins according to which a catalyst in accordance with Claim 26 is used.

28. Process according to Claim 27, applied to the polymerization of ethylene.